# EUROPEAN PATENT SPECIFICATION

(11) **EP 3 733 373 B1**
(45) Date of publication and mention of the grant of the patent: **21.06.2023**
(21) Application number: 19172289.1
(22) Date of filing: 02.05.2019
(51) Int. Cl.: B29C 48/08, B29C 55/06

(54) **PLANT AND PROCESS FOR PRODUCING A PLASTIC STRETCH FILM**
FABRIK UND VERFAHREN ZUR HERSTELLUNG VON KUNSTSTOFFSTRETCHFOLIEN
INSTALLATION ET PROCÉDÉ DE FABRICATION D'UN FILM ÉTIRÉ EN PLASTIQUE

(43) Date of publication of application: 04.11.2020
(73) Proprietor: Amut S.p.A., 28100 Novara (IT)
(72) Inventor: PROVERA, Vander, I-28100 Novara (NO) (IT)
(74) Representative: Valentini, Giuliano

(56) References cited:
- EP-A2- 0 879 691
- EP-A2- 0 925 897
- EP-B1- 0 879 691
- US-A1- 2017 355 122

## Description

### Technical Field of the Invention

The present invention concerns a plant and process for producing a plastic stretch film.

### Prior art

The plants for producing plastic stretch films are known in the art. In some embodiments, these plants are equipped with one or more extruders which feed a flat extrusion head. The melted plastic material comes out of the flat extrusion head and is deposited on a chill roll so as to solidify the material and thus produce the stretch film which will then be wound on bobbins in the subsequent stations of the plant. Generally, a plant of this type comprises a device for detecting the thickness of the cooled stretch film. In fact, the thickness is the main parameter which must be continuously controlled throughout the entire production cycle so as to avoid, or at least limit, the waste of material that does not comply with the desired final product. A suitably programmed control unit intervenes to correct possible deviations from the desired thickness by adjusting, for example, the speed of the extruders, in particular the rotation speed of the screws of the extruders, and/or the rotation speed of the chill roll, and/or the adjustable opening of the flat extrusion head. Other parameters are monitored by suitable sensors, such as for example temperature sensors, which transmit signals to the control unit to intervene, for example, on the temperature of the heat exchange fluid that is circulated inside the chill roll.

It is also well known that the qualitative characteristics of the stretch film depend on the type of plastic material used, for example a mixture of thermoplastic polymers. In practice, it is not possible to ensure the same final product quality when using the same productive parameters for different types of plastic materials or for different mixtures of plastic materials.

EP 0925897 A2 discloses some embodiments of a casting apparatus for formation of a resin-made membrane. The apparatus has a heated suction chamber having temperature sensors placed in different positions inside the chamber. A temperature controller receives information representative of the temperature sensed by the temperature sensors and compares the temperature information with a given preset value to control the heaters associated to the suction chamber.

The Patent Application US-A1-2017355122 suggests a method and a plant for detecting the qualitative characteristics of a stretch film in terms of stretchability of the film produced. This document correlates the qualitative characteristics of "frost line," of the stretch film during its transit on the chill roll. The search of the transverse solidification profile is achieved by means of a mobile temperature sensor which is displaced angularly with respect to the flat extrusion head so as to detect the temperature at which the film deposited on the chill roll solidifies.

The stretchability of the film is not the only qualitative characteristic of a stretch film. Further characteristics are often determined for different applications, for example, the containment force and/or the puncture resistance, which must thus be achieved for the final product according to the requirements of each producer who uses a plant for producing stretch films.

There is thus a need to always ensure, for each type of thermoplastic material used, the same qualitative characteristics for each stretch film produced.

### Summary of the Invention

Given the above, an object of the present invention is to propose a plant and a process which are able to ensure the production of stretch films having the same qualitative characteristics for the same thermoplastic material used.

A further object of the present invention is to propose a plant and a process for producing stretch films by using a set of production parameters which can be set in the production plant of the stretch films, also in repeated production cycles.

A further object of the present invention is to propose a plant and a process of the aforesaid type which allow to automatically regulate the production of stretch films such as to ensure the desired qualitative characteristics of the stretch films produced. These objects are achieved by the present invention thanks to a plant for producing stretch films according to claim 1. Further peculiar characteristics of the present invention are set forth in the respective dependent claims.

A plant for producing a plastic stretch film comprises:
one or more extruders which feed a flat extrusion head;
at least one chill roll to cool the melted plastic material coming out of the flat extrusion head, the chill roll having cylindrical shape and being rotated around its axis;
a vacuum box arranged near the flat extrusion head;
a device for detecting the thickness of the cooled stretch film;
and a control unit equipped with a memory and programmed to regulate the production parameters of the plastic stretch film at least depending on the signals provided by the device for detecting the thickness of the cooled stretch film and by one or more sensors for detecting the physical characteristics of the stretch film deposited on the chill roll.

According to the present invention, the plant comprises a mobile temperature sensor arranged in a fixed angular position with respect to the flat extrusion head and the control unit is programmed to regulate the depression generated by the vacuum box at least depending on the temperature detected by the mobile temperature sensor.

It was surprisingly noted that, by varying the depression exerted by the vacuum box, the position of the solidification profile of the plastic material on the chill roll is regulated. This way, by detecting the temperature in any fixed angular position with respect to the flat extrusion head, the position at which the solidification of the stretch film occurs can be modified without having to find such position around the chill roll.

The mobile temperature sensor is mounted on a support which moves in a linear direction parallel to the axis of the chill roll to detect the temperature of the stretch film detected by the mobile temperature sensor.

The vacuum box comprises fans rotated by electric motors equipped, for example, with encoders or the like. The rotation speed of the electric motor of each fan is controlled by a respective inverter independently of the rotation speed of the other motors, which are each also controlled by a respective inverter and which rotate the other fans inside the vacuum box.

The vacuum box can extend, for example, over the entire axial length of the chill roll and comprises at least two separate chambers axially extending over the entire length of the vacuum box.

In an embodiment, at least one fan is arranged inside each of the at least two separate chambers.

The plant can further comprise at least one fixed temperature sensor which is arranged near the flat extrusion head, for example at the center of the casting or at another predetermined point, to detect the temperature of the melted plastic material coming out of the flat extrusion head.

The invention further concerns a process for producing a plastic stretch film in a plant according to the invention. The plant thus comprises one or more extruders which feed a flat extrusion head, at least one chill roll to cool the melted plastic material coming out of the flat extrusion head, a vacuum box arranged near the flat extrusion head, a device to detect the thickness of the cooled stretch film, and a control unit equipped with a memory and programmed to regulate the production parameters of the plastic stretch film at least depending on the signals provided by the device for detecting the thickness of the cooled stretch film and by one or more sensors for detecting the physical characteristics of the stretch film deposited on the chill roll.

The process comprises the steps of:
a) depositing the extruded plastic material at the melted state on the chill roll;
b) detecting the thickness of the cooled stretch film;
c) detecting the temperature of the stretch film at one or more points along the path of the stretch film deposited on the chill roll.

The process according to the present invention further comprises the steps of:
d) uploading the data relative to the production parameters of the stretch film to the memory of the control unit before step a);
e) detecting the temperature along the path of the stretch film deposited on the chill roll by a mobile temperature sensor arranged in a fixed angular position with respect to the flat extrusion head; and
f) regulating the depression generated by the vacuum box at least depending on the temperature detected by the mobile temperature sensor to vary the position of the solidification profile of the plastic material on the chill roll.

The mobile temperature sensor is mounted on a support which is moved in a linear direction parallel to the axis of the chill roll to detect the temperature of the stretch film along a direction transverse to the forward direction of the stretch film deposited on the chill roll.

The temperature of the stretch film deposited on the chill roll can also be regulated, for example, by varying the temperature of the heat exchange fluid fed to the chill roll.

Prior to starting up the production of relevant quantities of stretch films, or also during the production cycle, stretch film samples can be subjected to tests. If the stretch film samples meet the desired qualitative characteristics, the data relative to the set production parameters are saved, for example, in the memory of the control unit, or anyhow in a separate memory from which it is then possible to upload it to the memory of the control unit.

The production parameters that are saved and/or uploaded to the memory of the control unit can include one or more among the type of plastic material fed to the extruders, the speed of extrusion of the melted plastic material from the flat extrusion head, the rotation speed of the chill roll, the thickness of the stretch film, the temperature of the heat exchange fluid fed to the chill roll, the temperature of the melted plastic material at the outlet of the flat extrusion head and the temperature of the stretch film detected by the mobile temperature sensor.

This set of parameters is used to evaluate the desired qualitative characteristics of the stretch film during the testing of the stretch film samples. The qualitative characteristics of the stretch film can include, for example, at least the containment force of the stretch film and the puncture resistance of the stretch film.

### Brief Description of the Drawings

Further characteristics and advantages of the present invention will become clear in the following description, made with reference to the accompanying drawings by way of example and without limitations, in which:
- Figure 1 is a front schematic view of a plant for producing a plastic stretch film according to an embodiment of the present invention; and
- Figure 2 is a schematic side view of a part of the plant in figure 1.

### Detailed Description

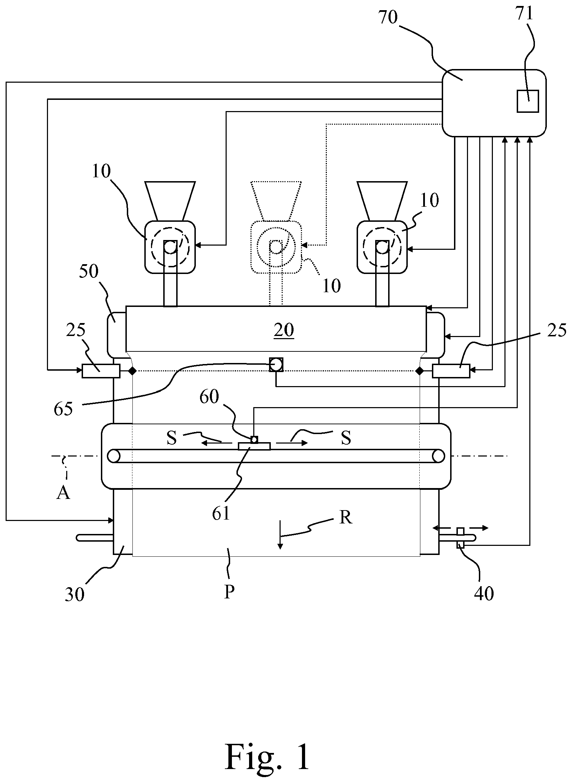

A plant for producing a plastic stretch film is schematically depicted in Figure 1. The plant comprises extruders 10 which feed a flat extrusion head 20 through which the melted plastic material is deposited on a chill roll 30. The chill roll 30 has cylindrical shape and is rotated around its axis A.

The cooled stretch film P is thus led towards a device 40, of known type, for detecting the thickness of the film P before it is directed towards the successive stages of the plant, for example the cutting and trimming stages and the stages for winding the film P on bobbins.

A vacuum box 50 able to produce a depression zone between the outlet of the flat extrusion head 20 and the surface of the chill roll 30 is also arranged near the flat extrusion head 20.

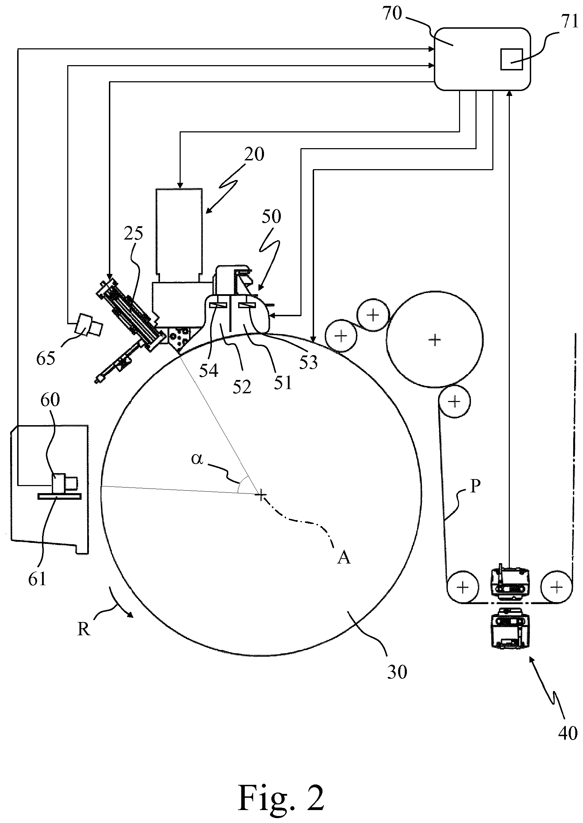

The plant according to the present invention is equipped with a mobile temperature sensor 60 arranged in a fixed angular position α (Fig. 2) with respect to the flat extrusion head 20. The mobile temperature sensor 60 is mounted on a support 61 which moves in a linear direction parallel to the axis A of the chill roll 30 to detect the temperature of the stretch film P along a transverse direction, denoted by the arrows S, with respect to the forward direction, denoted by the arrow R, of the stretch film P deposited on the chill roll 30.

A fixed temperature sensor 65 is arranged near the flat extrusion head 20, for example at the centerline of the head 20, to detect the temperature of the melted plastic material.

Moreover, edge-fixing devices 25 of known type, which are used to solidify in advance the melted plastic material at the edges of the mass coming out of the flat extrusion head 20, are also depicted in the view of Figure 1. The edge-fixing devices 25 can be movable in a controlled way along at least three axes to adjust their position with respect to the chill roll 30.

The operation of the plant is controlled by a control unit 70 equipped with a memory 71 to which the data relative to the production parameters is uploaded. The control unit 70 is programmed to regulate the production parameters of the stretch film P at least depending on the signals provided by the device 40 for detecting the thickness of the stretch film P and by the various sensors for detecting the physical characteristics of the stretch film deposited on the chill roll 30, such as for example the temperature sensors 60 and 65.

In particular, the control unit 70 is programmed to regulate the depression generated by the vacuum box 50 at least depending on the temperature detected by the mobile temperature sensor 60.

Also with reference to Figure 2, the vacuum box 50 comprises at least two separate chambers 51 and 52 axially extending over the entire length of the vacuum box 50. At least one fan 53 and 54, respectively, rotated by an electric motor, for example a motor equipped with an encoder or the like, whose rotation speed is controlled by a respective inverter, is arranged in each chamber 51 and 52. Each inverter is controlled by the control unit 70 independently of the others to independently regulate the rotation speed of the motors driving the fans 53 and 54.

Further regulations applied by the control unit 70 can concern, for example: the temperature of the heat exchange fluid fed to the chill roll 30 to regulate the temperature of the stretch film P deposited on the chill roll 20 depending on the temperatures detected by the sensors 60 and 65; the rotation speed of the chill roll 30, or the speed of the screws of the extruders 10, or also the opening of the extrusion head 20 to adjust the thickness of the film P depending on the thickness detected by the device 40; and also the position of the edge-fixing devices 25, as well as of other adjustable devices being in the plant.

The process for the production of a plastic stretch film P provides to deposit the plastic material extruded at the melted state on the chill roll 30 and to detect some physical parameters of the production cycle, for example the thickness of the cooled stretch film P by means of the device 40 and the temperature of the stretch film P by means of the temperature sensors 60 and 65.

At the start of each productive cycle, the data relative to the production parameters of the stretch film P is uploaded to the memory 71 of the control unit 70. After the production cycle has been started, in particular the temperature of the stretch film P deposited on the chill roll 30 is detected by the mobile temperature sensor 60 arranged in a fixed angular position with respect to the flat extrusion head 20. Depending on at least the temperature detected by the mobile sensor 60, the control unit 70 can regulate the depression generated by the vacuum box 50 to vary the position of the solidification profile of the plastic material on the chill roll 30.

The mobile temperature sensor 60 is mounted on the support 61 which is continuously moved in both directions along a linear direction parallel to the axis A of the chill roll. The temperature of the stretch film P is thus detected along a transverse direction S with respect to the forward direction R of the stretch film P deposited on the chill roll 30.

The production cycle provides that some samples of the so-obtained stretch film are subjected to tests. If the samples meet the desired qualitative characteristics, the data relative to the production parameters of the stretch film are saved in the memory 71 of the control unit 70, or in a separate memory, for example a removable memory unit, to allow them to be subsequently uploaded to the same memory 71.

The desired qualitative characteristics of the stretch film P evaluated during the testing of the stretch film samples can include, for example, at least the containment force of the stretch film P and its puncture resistance.

The data of the production parameters that are saved and/or uploaded to the memory 71 of the control unit 70 can include for example one or more among: the type of plastic material fed to the extruders 10, the speed of extrusion of the melted plastic material from the flat extrusion head 20, the rotation speed of the chill roll 30, the thickness of the stretch film P, the temperature of the heat exchange fluid fed to the chill roll 30, the temperature of the melted plastic material at the outlet of the flat extrusion head 20 and the temperature of the stretch film detected by the mobile temperature sensor 60.

Various modifications may be made to the embodiments described herein without departing from the scope of the present invention. For example, a humidity sensor can be installed on the mobile support 61, as well as other types of sensors can be installed in the plant and used to ensure further qualitative characteristics of the stretch film produced.

## Claims

1. A plant for producing a plastic stretch film (P), comprising:
one or more extruders (10) which feed a flat extrusion head (20);
at least one chill roll (30) to cool the melted plastic material coming out of the flat extrusion head (20), said chill roll (30) having cylindrical shape and being rotated around its axis (A);
a vacuum box (50) arranged near the flat extrusion head (20);
a device (40) for detecting the thickness of the cooled stretch film (P);
and a control unit (70) equipped with a memory (71) and programmed to regulate the production parameters of the plastic stretch film (P) at least depending on the signals provided by said device (40) for detecting the thickness of the cooled stretch film (P) and by one or more sensors for detecting the physical characteristics of the stretch film (P) deposited on the chill roll (30),
wherein a mobile temperature sensor (60) is arranged in a fixed angular position (α) with respect to the flat extrusion head (20), **characterized in that** said control unit (70) is programmed to regulate the depression generated by the vacuum box (50) at least depending on the temperature detected by said mobile temperature sensor (60).

2. The plant according to claim 1, wherein said mobile temperature sensor (60) is mounted on a support (61) which moves in a linear direction parallel to the axis (A) of the chill roll (30) to detect the temperature of the stretch film (P) along a direction transverse to the forward direction (R) of the stretch film (P) deposited on the chill roll (30).

3. The plant according to claim 1, wherein said vacuum box (50) comprises fans (53, 54) rotated by electric motors, and wherein the rotation speed of the motor of each fan is controlled by a respective inverter independently of the rotation speed of the motors, each one controlled by a respective inverter, which rotate the other fans of the vacuum box (50).

4. The plant according to claim 1, wherein said vacuum box (50) extends at least over the entire axial length of the chill roll (30) and comprises at least two separate chambers (51, 52) axially extending over the entire length of the vacuum box (50).

5. The plant according to claim 3 or 4, wherein at least one fan (53; 54) is arranged in each of said at least two separate chambers (51; 52).

6. The plant according to claim 1, wherein at least one fixed temperature sensor (65) is arranged near the flat extrusion head (20) to detect the temperature of the melted plastic material coming out of the flat extrusion head (20).

7. A process for producing a plastic stretch film (P) in a plant comprising one or more extruders (10) which feed a flat extrusion head (20), at least one chill roll (30) to cool the melted plastic material coming out of the flat extrusion head (20), a vacuum box (50) arranged near the flat extrusion head (20), a device (40) to detect the thickness of the cooled stretch film (P), and a control unit (70) equipped with a memory (71) and programmed to regulate the production parameters of the plastic stretch film (P) at least depending on the signals provided by said device (40) for detecting the thickness of the cooled stretch film (P) and by one or more sensors (60, 65) for detecting the physical characteristics of the stretch film (P) deposited on the chill roll (30), the process comprising the steps of:
a) depositing the extruded plastic material at the melted state on the chill roll (30);
b) detecting the thickness of the cooled stretch film (P);
c) detecting the temperature of the stretch film (P) at one or more points along the path of the stretch film (P) deposited on the chill roll (30);
d) uploading the data relative to the production parameters of the stretch film (P) to the memory (71) of the control unit (70) before step a);
e) detecting the temperature along the path of the stretch film (P) deposited on the chill roll (30) by a mobile temperature sensor (60) arranged in a fixed angular position with respect to the flat extrusion head (20),
**characterized by** comprising the step of:
f) regulating the depression generated by the vacuum box (50) at least depending on the temperature detected by said mobile temperature sensor (60) to vary the position of the solidification profile of the plastic material on the chill roll (30).

8. The process according to claim 7, wherein said mobile temperature sensor (60) is mounted on a support (61) which is moved in a linear direction parallel to the axis (A) of the chill roll (30) to detect the temperature of the stretch film (P) along a direction transverse to the forward direction of the stretch film (P) deposited on the chill roll (30).

9. The process according to claim 7, wherein the step of regulating the temperature of the stretch film (P) deposited on the chill roll (30) is further provided by regulating the temperature of the heat exchange fluid fed to the chill roll (30).

10. The process according to claim 7, wherein there are further provided the steps of:
- subjecting samples of the so-obtained stretch film (P) to tests;
- saving the data of the production parameters for the stretch film (P) samples, which meet the desired qualitative characteristics, in the memory (71) of said control unit (70).

11. The process according to claim 10, wherein the data of the production parameters saved and/or uploaded to the memory (71) of said control unit (70) include one or more among:
- the type of plastic material fed to the extruders (10);
- the speed of extrusion of the melted plastic material from the flat extrusion head (20);
- the rotation speed of the chill roll (30);
- the thickness of the stretch film (P);
- the temperature of the heat exchange fluid fed to the chill roll (30);
- the temperature of the melted plastic material at the outlet of the flat extrusion head (20); and
- the temperature of the stretch film (P), detected by said mobile temperature sensor (60).

12. The process according to claim 10, wherein all the desired qualitative characteristics of the stretch film (P), which are evaluated during the stretch film (P) sample tests, include at least the containment force of the stretch film (P) and the puncture resistance of the stretch film (P).

## Patentansprüche

1. Anlage zur Herstellung einer Kunststoffstretchfolie (P), umfassend:
einen oder mehrere Extruder (10), die einen Flachextrusionskopf (20) speisen;
mindestens eine Kühlwalze (30) zum Kühlen des geschmolzenen Kunststoffmaterials, das aus dem Flachextrusionskopf (20) kommt, wobei die Kühlwalze (30) eine zylindrische Form hat und um ihre Achse (A) gedreht wird;
einen Vakuumkasten (50), der nahe dem Flachextrusionskopf (20) angeordnet ist;
eine Vorrichtung (40) zum Erfassen der Dicke der abgekühlten Stretchfolie (P);
und eine Steuereinheit (70), die mit einem Speicher (71) ausgestattet und programmiert ist, um die Produktionsparameter der Kunststoffstretchfolie (P) zumindest in Abhängigkeit von den Signalen zu regeln, die von der Vorrichtung (40) zum Erfassen der Dicke der gekühlten Stretchfolie und von einem oder mehreren Sensoren zum Erfassen der physikalischen Eigenschaften der auf der Kühlwalze (30) abgelegten Stretchfolie (P) bereitgestellt werden,
wobei ein beweglicher Temperatursensor (60) in einer festen Winkelposition (α) in Bezug auf den Flachextrusionskopf (20) angeordnet ist, **dadurch gekennzeichnet, dass** die Steuereinheit (70) programmiert ist, um den durch den Vakuumkasten (50) erzeugten Unterdruck zumindest in Abhängigkeit von der durch den beweglichen Temperatursensor (60) erfassten Temperatur zu regulieren.

2. Die Anlage gemäß Anspruch 1, wobei der bewegliche Temperatursensor (60) auf einem Träger (61) montiert ist, der sich in einer linearen Richtung parallel zur Achse (A) der Kühlwalze (30) bewegt, um die Temperatur der Streckfolie (P) entlang einer Richtung quer zur Vorwärtsrichtung (R) der auf der Kühlwalze (30) abgelegten Streckfolie (P) zu erfassen.

3. Die Anlage gemäß Anspruch 1, wobei der Vakuumkasten (50) Ventilatoren (53, 54) umfasst, die von Elektromotoren gedreht werden, und wobei die Rotationsgeschwindigkeit des Motors jedes Ventilators durch einen entsprechenden Wechselrichter unabhängig von der Rotationsgeschwindigkeit der Motoren gesteuert wird, von denen jeder durch einen entsprechenden Wechselrichter gesteuert wird, die die anderen Ventilatoren des Vakuumkastens (50) drehen.

4. Die Anlage gemäß Anspruch 1, wobei sich der Vakuumkasten (50) zumindest über die gesamte axiale Länge der Kühlwalze (30) erstreckt und zumindest zwei getrennte Kammern (51, 52) umfasst, die sich axial über die gesamte Länge des Vakuumkastens (50) erstrecken.

5. Die Anlage gemäß Anspruch 3 oder 4, wobei in jeder der mindestens zwei getrennten Kammern (51, 52) mindestens ein Ventilator (53, 54) angeordnet ist.

6. Die Anlage gemäß Anspruch 1, wobei mindestens ein feststehender Temperatursensor (65) in der Nähe des Flachextrusionskopfes (20) angeordnet ist, um die Temperatur des geschmolzenen Kunststoffmaterials zu erfassen, das aus dem Flachextrusionskopf (20) kommt.

7. Ein Verfahren zur Herstellung einer Kunststoffstretchfolie (P) in einer Anlage mit einem oder mehreren Extrudern (10), die einen Flachextrusionskopf (20) speisen, mindestens eine Kühlwalze (30) zum Kühlen des aus dem Flachextrusionskopf (20) kommenden geschmolzenen Kunststoffmaterials, einen nahe des Flachextrusionskopfes (20) angeordneten Vakuumkasten (50), eine Vorrichtung (40) zum Erfassen der Dicke der gekühlten Stretchfolie (P) und eine Steuereinheit (70), die mit einem Speicher (71) ausgestattet und programmiert ist, um die Produktionsparameter der Kunststoffstretchfolie (P) zumindest in Abhängigkeit von den Signalen zu regeln, die von der Vorrichtung (40) zum Erfassen der Dicke der gekühlten Stretchfolie (P) und durch einen oder mehrere Sensoren (60, 65) zum Erfassen der physikalischen Eigenschaften der auf der Kühlwalze (30) abgelegten Stretchfolie bereitgestellt werden, wobei das Verfahren die folgenden Schritte umfasst:
a) Ablegen des extrudierten Kunststoffmaterials im geschmolzenen Zustand auf der Kühlwalze (30);
b) Erfassen der Dicke der abgekühlten Stretchfolie (P);
c) Erfassen der Temperatur der Stretchfolie (P) an einem oder mehreren Punkten entlang des Weges der auf der Kühlwalze (30) abgelegten Stretchfolie (P),
d) Hochladen der Daten bezüglich der Produktionsparameter der Stretchfolie (P) in den Speicher (71) der Steuereinheit (70) vor Schritt a);
e) Erfassen der Temperatur entlang des Weges der auf der Kühlwalze (30) abgelegten Stretchfolie (P) durch einen beweglichen Temperatursensor (60) der in einer festen Winkelposition in Bezug auf den Flachextrusionskopf (20) angeordnet ist;
**gekennzeichnet durch** das Vorhandensein des Schrittes:
f) Regulieren des durch den Vakuumkasten (50) erzeugten Unterdrucks zumindest in Abhängigkeit von der durch den beweglichen Temperatursensor (60) erfassten Temperatur, um die Position des Erstarrungsprofils des Kunststoffmaterials auf der Kühlwalze (30) zu verändern.

8. Das Verfahren gemäß Anspruch 7, wobei der bewegliche Temperatursensor (60) auf einem Träger (61) montiert ist, der in einer linearen Richtung parallel zur Achse (A) der Kühlwalze (30) bewegt wird, um die Temperatur der Streckfolie (P) entlang einer Richtung quer zu der Vorwärtsrichtung der auf der Kühlwalze (30) abgelegten Stretchfolie (P) zu erfassen.

9. Das Verfahren gemäß Anspruch 7, wobei der Schritt des Regulierens der Temperatur der auf der Kühlwalze (30) abgelegten Stretchfolie (P) ferner bereitgestellt wird durch Regulieren der Temperatur des der Kühlwalze (30) zugeführten Wärmeaustauschfluids.

10. Das Verfahren gemäß Anspruch 7, wobei ferner die folgenden Schritte vorgesehen sind:
- Testen von Proben der so erhaltenen Stretchfolie (P);
- Speichern der Daten der Produktionsparameter für die Proben der Stretchfolie (P), die die gewünschten qualitativen Eigenschaften erfüllen, im Speicher (71) der Steuereinheit (70).

11. Das Verfahren gemäß Anspruch 10, wobei die Daten der Produktionsparameter, die gespeichert und/oder in den Speicher (71) der Steuereinheit (70) hochgeladen werden, eines oder mehrere umfassen von:
- die Art des den Extrudern (10) zugeführten Kunststoffmaterials;
- die Extrusionsgeschwindigkeit des geschmolzenen Kunststoffmaterials aus dem Flachextrusionskopf (20);
- die Rotationsgeschwindigkeit der Kühlwalze (30);
- die Dicke der Stretchfolie (P);
- die Temperatur des der Kühlwalze (30) zugeführten Wärmetauscherfluids;
- die Temperatur des geschmolzenen Kunststoffmaterials am Ausgang des Flachextrusionskopfes (20); und
- die Temperatur der Stretchfolie (P), erfasst durch den beweglichen Temperatursensor (60).

12. Das Verfahren gemäß Anspruch 10, wobei alle gewünschten qualitativen Eigenschaften der Stretchfolie (P), die während der Probentests der Stretchfolie (P) bewertet werden, mindestens die Rückhaltekraft der Stretchfolie (P) und die Durchstoßfestigkeit der Stretchfolie (P) umfassen.

## Revendications

1. Installation pour la fabrication d'un film étirable en plastique (P), comprenant :
une ou plusieurs extrudeuses (10) qui alimentent une tête d'extrusion plate (20) ;
au moins un cylindre de refroidissement (30) pour refroidir la matière plastique fondue sortant de la tête d'extrusion plate (20), ledit cylindre de refroidissement (30) ayant une forme cylindrique et étant mis en rotation autour de son axe (A) ;
une boîte à vide (50) disposée près de la tête d'extrusion plate (20) ;
un dispositif (40) pour détecter l'épaisseur du film étirable refroidi (P) ;
et une unité de commande (70) équipée d'une mémoire (71) et programmée pour réguler les paramètres de production du film étirable en plastique (P) au moins en fonction des signaux pourvus par ledit dispositif (40) pour détecter l'épaisseur du film étirable refroidi (P) et par un ou plusieurs capteurs pour détecter les caractéristiques physiques du film étirable (P) déposé sur le cylindre de refroidissement (30),
dans lequel un capteur de température mobile (60) est disposé dans une position angulaire fixe (α) par rapport à la tête d'extrusion plate (20), **caractérisé en ce que** ladite unité de commande (70) est programmée pour réguler la dépression générée par la boîte à vide (50) au moins en fonction de la température détectée par ledit capteur de température mobile (60).

2. Installation selon la revendication 1, dans laquelle ledit capteur de température mobile (60) est monté sur un support (61) qui se déplace dans une direction linéaire parallèle à l'axe (A) du cylindre de refroidissement (30) pour détecter la température du film étirable (P) le long d'une direction transversale à la direction avant (R) du film étirable (P) déposé sur le cylindre de refroidissement (30).

3. Installation selon la revendication 1, dans laquelle ladite boîte à vide (50) comprend des ventilateurs (53, 54) mis en rotation par des moteurs électriques, et dans laquelle la vitesse de rotation du moteur de chaque ventilateur est commandée par un inverseur respectif indépendamment de la vitesse de rotation des moteurs, chacun étant commandé par un inverseur respectif, qui mettent en rotation les autres ventilateurs de la boîte à vide (50).

4. Installation selon la revendication 1, dans laquelle ladite boîte à vide (50) s'étend au moins sur toute la longueur axiale du cylindre de refroidissement (30) et comprend au moins deux chambres séparées (51, 52) s'étendant axialement sur toute la longueur de la boîte à vide (50).

5. Installation selon la revendication 3 ou 4, dans laquelle au moins un ventilateur (53 ; 54) est disposé dans chacune desdites au moins deux chambres séparées (51 ; 52).

6. Installation selon la revendication 1, dans laquelle au moins un capteur de température fixe (65) est disposé près de la tête d'extrusion plate (20) pour détecter la température de la matière plastique fondue sortant de la tête d'extrusion plate (20).

7. Procédé de fabrication d'un film étirable en plastique (P) dans une installation comprenant une ou plusieurs extrudeuses (10) qui alimentent une tête d'extrusion plate (20), au moins un cylindre de refroidissement (30) pour refroidir la matière plastique fondue sortant de la tête d'extrusion plate (20), une boîte à vide (50) disposée près de la tête d'extrusion plate (20), un dispositif (40) pour détecter l'épaisseur du film étirable refroidi (P), et une unité de commande (70) équipée d'une mémoire (71) et programmée pour réguler les paramètres de fabrication du film étirable en plastique (P) au moins en fonction des signaux pourvus par ledit dispositif (40) pour détecter l'épaisseur du film étirable refroidi (P) et par un ou plusieurs capteurs (60, 65) pour détecter les caractéristiques physiques du film étirable (P) déposé sur le cylindre de refroidissement (30), le procédé comprenant les étapes consistant à :
a) déposer la matière plastique extrudée à l'état fondu sur le cylindre de refroidissement (30) ;
b) détecter l'épaisseur du film étirable refroidi (P) ;
c) détecter la température du film étirable (P) en un ou plusieurs points le long du trajet du film étirable (P) déposé sur le cylindre de refroidissement (30) ;
d) télécharger les données relatives aux paramètres de fabrication du film étirable (P) vers la mémoire (71) de l'unité de commande (70) avant l'étape a) ;
e) détecter la température le long du trajet du film étirable (P) déposé sur le cylindre de refroidissement (30) par un capteur de température mobile (60) disposé dans une position angulaire fixe par rapport à la tête d'extrusion plate (20),
**caractérisé en ce qu'**il comprend l'étape consistant à :
f) réguler la dépression générée par la boîte à vide (50) au moins en fonction de la température détectée par ledit capteur de température mobile (60) pour faire varier la position du profil de solidification de la matière plastique sur le cylindre de refroidissement (30).

8. Procédé selon la revendication 7, dans lequel ledit capteur de température mobile (60) est monté sur un support (61) qui est déplacé dans une direction linéaire parallèle à l'axe (A) du cylindre de refroidissement (30) pour détecter la température du film étirable (P) le long d'une direction transversale à la direction avant du film étirable (P) déposé sur le cylindre de refroidissement (30).

9. Procédé selon la revendication 7, dans lequel l'étape de régulation de la température du film étirable (P) déposé sur le cylindre de refroidissement (30) est en outre pourvue par la régulation de la température du fluide d'échange de chaleur alimentant le cylindre de refroidissement (30).

10. Procédé selon la revendication 7, dans lequel il est en outre pourvu les étapes consistant à :
- soumettre des échantillons du film étirable (P) ainsi obtenu à des tests ;
- sauvegarder les données des paramètres de production pour les échantillons de film étirable (P), qui répondent aux caractéristiques qualitatives souhaitées, dans la mémoire (71) de ladite unité de commande (70).

11. Procédé selon la revendication 10, dans lequel les données des paramètres de production sauvegardées et/ou téléchargées dans la mémoire (71) de ladite unité de commande (70) comprennent un ou plusieurs éléments parmi les éléments suivants :
- le type de matière plastique alimentant les extrudeuses (10) ;
- la vitesse d'extrusion de la matière plastique fondue à partir de la tête d'extrusion plate (20) ;
- la vitesse de rotation du cylindre de refroidissement (30) ;
- l'épaisseur du film étirable (P) ;
- la température du fluide d'échange thermique alimentant le cylindre de refroidissement (30) ;
- la température de la matière plastique fondue à la sortie de la tête d'extrusion plate (20) ; et
- la température du film étirable (P), détectée par ledit capteur de température mobile (60).

12. Procédé selon la revendication 10, dans lequel toutes les caractéristiques qualitatives souhaitées du film étirable (P), qui sont évaluées pendant les tests d'échantillons de film étirable (P), comprennent au moins la force de confinement du film étirable (P) et la résistance à la perforation du film étirable (P).
